# EUROPEAN PATENT SPECIFICATION

(11) **EP 4 201 774 B1**
(45) Date of publication and mention of the grant of the patent: **18.06.2025**
(21) Application number: 22213778.8
(22) Date of filing: 15.12.2022
(51) Int. Cl.: B60W 30/182, B60W 30/18, B60W 50/00, B60K 28/04, B60W 50/08, B60W 50/12

(54) **INDUSTRIAL VEHICLE AND METHOD FOR CONTROLLING INDUSTRIAL VEHICLE**
NUTZFAHRZEUG UND VERFAHREN ZUR STEUERUNG EINES NUTZFAHRZEUGS
VÉHICULE INDUSTRIEL ET PROCÉDÉ DE COMMANDE DE VÉHICULE INDUSTRIEL

(30) Priority: 21.12.2021 JP 2021207137
(43) Date of publication of application: 28.06.2023
(73) Proprietor: KABUSHIKI KAISHA TOYOTA JIDOSHOKKI, Kariya-shi, Aichi-ken (JP)
(72) Inventor: TAKI, Yasuhiro, Kariya-shi, Aichi-ken (JP); HASEGAWA, Kimihide, Kariya-shi, Aichi-ken (JP)
(74) Representative: Hoffmann Eitle

(56) References cited:
- EP-A1- 3 006 251
- US-A1- 2004 089 491
- US-A1- 2006 254 847
- US-A1- 2015 034 424

## Description

### BACKGROUND

### 1. Field

The present disclosure relates to an industrial vehicle and a method for controlling an industrial vehicle.

### 2. Description of Related Art

Japanese Laid-Open Patent Publication No. 2006-316942 discloses an industrial vehicle that travels by transmitting a driving force of an engine to driven wheels via a driving force transmitting device coupled to the engine. When a driver becomes unseated so that a sitting signal of a sitting detection switch is turned OFF, a controller of the industrial vehicle stops energizing a forward solenoid valve or a reverse solenoid valve after a predetermined delay time elapses. When the driver is seated again, the controller restarts energizing the forward solenoid valve or the reverse solenoid valve if the sitting signal of the sitting detection switch is ON and a forward signal or a reverse signal of a forward/reverse instruction switch is turned ON after the controller detects that an operated direction of a forward/reverse operation lever is neutral.

A driver of an industrial vehicle may be temporarily unseated, for example, in order to check the surrounding situation during driving. However, in the above-described configuration, when an unseated state continues until the delay time elapses, the transmission of the driving force is interrupted. The operational feeling of the industrial vehicle during driving is changed by such interruption of the driving force transmission. As a change in the operational feeling increases, the driving comfort for the driver may be reduced significantly.
In addition, there is known from US 2004/0089491 A1 a creep torque command interrupt for electric vehicles. A safety monitoring system employs a method of preventing an unwanted drive-off off the vehicle by means of considering amongst others whether the driver has left the vehicle. US 2015/0034424 A1 discloses releasing a load handling interlock of a forklift truck under the consideration of a key switch being on, a seat switch being on and the engine being rotated with a predetermined engine speed or more. Further, EP 3 006 251 A1 discloses a vehicle driving force control unit which considers amongst others a driver sensing unit for sensing a state in which the driver is not sitting on the driver seat.

### SUMMARY

The mentioned problems are solved by the subject-matter of the independent claims. Further preferred embodiments are defined in the dependent claims.

In one aspect, an industrial vehicle according to independent claim 1 is provided.

In another aspect, there is provided a method for controlling an industrial vehicle is provided in independent claim 5.

### BRIEF DESCRIPTION OF THE DRAWINGS

Fig. 1 is a perspective view of an entire industrial vehicle according to a first embodiment.
Fig. 2 is a diagram showing a system configuration of the industrial vehicle according to the first embodiment.
Fig. 3 is a flowchart showing a travel controlling process according to background art useful for understanding the invention, but not covered by the claims.
Fig. 4 is a flowchart showing an unseated state process according to background art useful for understanding the invention, but not covered by the claims.
Fig. 5 is a flowchart showing a returning process according to background art useful for understanding the invention, but not covered by the claims.
Fig. 6 is a flowchart showing an unseated state process according to an embodiment of the invention.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### <First background art useful for understanding the invention, but not covered by the claims >

An industrial vehicle 10 according to a first background art will now be described.

### <Industrial Vehicle 10>

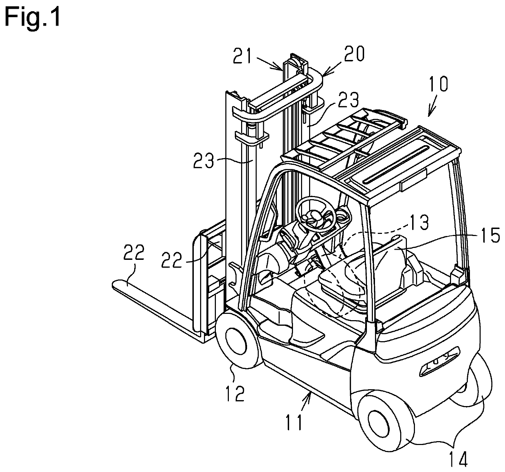

As shown in Fig. 1, the industrial vehicle 10 includes a vehicle body 11, two driven wheels 12, 13, two steered wheels 14, a driver's seat 15, and a cargo handling device 20. The industrial vehicle 10 of the present embodiment is a counterbalance forklift.

### <Driven Wheels 12, 13>

The driven wheels 12, 13 are provided in a front lower part of the vehicle body 11. The two driven wheels 12, 13 are separated from each other in a vehicle width direction.

### <Steered Wheels 14>

The two steered wheels 14 are provided in a rear lower part of the vehicle body 11. The two steered wheels 14 are separated from each other in the vehicle width direction.

### <Driver's Seat 15>

The driver's seat 15 is a seat on which a driver sits. The driver's seat 15 is provided in an upper part of the vehicle body 11.

### <Cargo Handling Device 20>

The cargo handling device 20 includes a mast 21, two forks 22, and lift cylinders 23. The mast 21 is provided in front of the vehicle body 11. The forks 22 are lifted and lowered together with the mast 21. A cargo is mounted on the forks 22. The lift cylinders 23 include hydraulic cylinders. The lift cylinders 23 are extended or retracted to lift or lower the mast 21. The forks 22 are lifted or lowered as the mast 21 is lifted or lowered. The industrial vehicle 10 of the present embodiment performs a traveling operation and a cargo handling operation when operated by the driver.

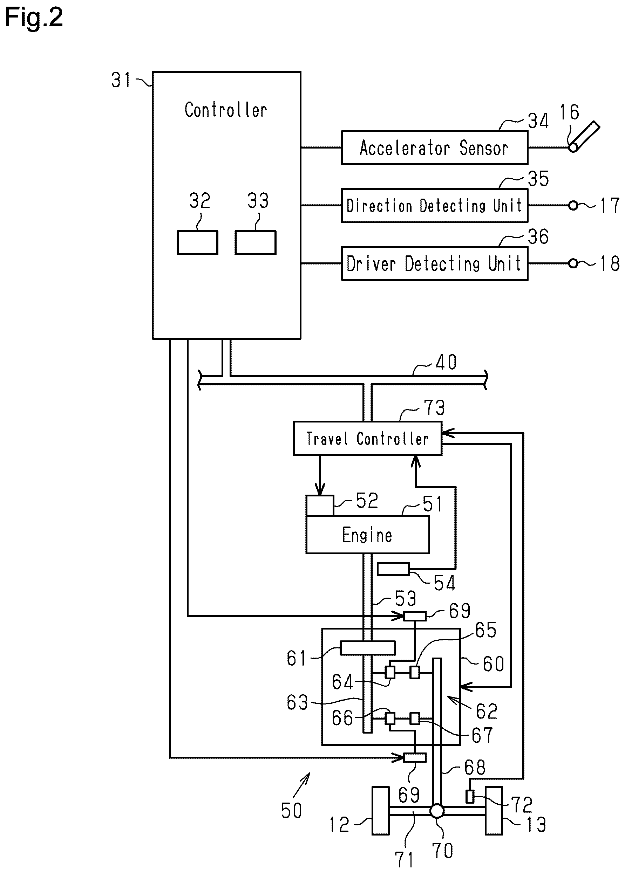

As shown in Fig. 2, the industrial vehicle 10 includes a controller 31, an accelerator 16, an accelerator sensor 34, a direction instructing unit 17, a direction detecting unit 35, a seat switch 18, a driver detecting unit 36, a travel system 50, and a bus 40.

### <Controller 31, Processor 32, and Memory 33>

The controller 31 includes a processor 32 and a memory 33. The processor 32 may include, for example, a central processing unit (CPU), a graphics processing unit (GPU), or a digital signal processor (DSP). The memory 33 includes a random-access memory (RAM) and a read-only memory (ROM). The memory 33 stores programs for operating the industrial vehicle 10. The memory 33 stores program codes or commands configured to cause the processor 32 to execute processes. The memory 33, which is a computer-readable medium, includes any type of medium that is accessible by a general-purpose computer or a dedicated computer. The controller 31 may include a hardware circuit such as an application specific integrated circuit (ASIC) and a field programmable gate array (FPGA). The controller 31, which is processing circuitry, may include one or more processors that operate according to a computer program, one or more hardware circuits such as an ASIC and an FPGA, or a combination thereof.

### <Accelerator 16>

The accelerator 16 is operated by the driver when accelerating the vehicle body 11. The accelerator 16 instructs the controller 31 to accelerate the industrial vehicle 10 in response to operation by the driver. The accelerator 16 is, for example, an accelerator pedal. The accelerator 16 may have any specific configuration, and may be a switch, a lever, a touch panel, or the like.

### <Accelerator Sensor 34>

The accelerator sensor 34 detects an accelerator operated amount, which is the operated amount of the accelerator 16. The accelerator sensor 34 outputs an electric signal that corresponds to the accelerator operated amount to the controller 31. The controller 31 acquires the accelerator operated amount based on the electric signal from the accelerator sensor 34.

### <Direction Instructing Unit 17>

The direction instructing unit 17 is used to instruct the traveling direction of the vehicle body 11 in accordance with an operated direction. The traveling direction of the vehicle body 11 is regarded as the traveling direction of the industrial vehicle 10. Specifically, the direction instructing unit 17 is a direction lever. The operated direction includes a direction instructing a forward movement and a direction instructing a reverse movement. The direction instructing unit 17 is configured to be operable in the direction instructing a forward movement or the direction instructing a reverse movement with reference to a neutral position. The specific configuration of the direction instructing unit 17 is not limited to a direction bar, but may be a switch, a touch panel, or the like.

### <Direction Detecting Unit 35>

The direction detecting unit 35 detects the operated direction of the direction instructing unit 17. The direction detecting unit 35 is also referred to as a direction sensor. The direction detecting unit 35 detects whether the direction instructing unit 17 is operated in the direction instructing a forward movement or the direction instructing a reverse movement with reference to the neutral position of the direction instructing unit 17. The direction detecting unit 35 outputs an electric signal corresponding to the operated direction of the direction instructing unit 17 to the controller 31. The controller 31 acquires the operated direction of the direction instructing unit 17 based on the electric signal from the direction detecting unit 35. The controller 31 recognizes whether a forward movement is instructed by the driver, whether a reverse movement is instructed by the driver, or whether neither is instructed by the driver.

### <Seat Switch 18>

The seat switch 18 is a mechanism that is turned ON when the driver is seated on the driver's seat 15. The seat switch 18 is provided, for example, under the driver's seat 15. The specific configuration of the seat switch 18 is not limited to a switch, but may be a pressure sensitive sensor, a weight sensor, an optical sensor, a camera, or the like.

### <Driver Detecting Unit 36>

The driver detecting unit 36 is an electronic control unit that detects a driver state. The driver state includes an unseated state and a seated state. In the unseated state, the driver is not seated on the driver's seat 15. In the seated state, the driver is seated on the driver's seat 15. The driver state is detected based on a detection result of the seat switch 18. For example, when the seat switch 18 is ON, the driver detecting unit 36 determines that the driver state is the seated state. When the seat switch 18 is OFF, the driver detecting unit 36 determines that the driver state is the unseated state.

The method for detecting the driver state is not limited to the above described method, but may be any appropriate method. For example, when a weight sensor is used as a mechanism corresponding to the seat switch 18, the driver detecting unit 36 determines that the driver state is the seated state if the weight detected by the weight sensor is greater than or equal to a specified value, and determines that the driver state is the unseated state if the weight detected by the weight sensor is less than the specified value. When a camera is used as a mechanism corresponding to the seat switch 18, the driver detecting unit 36 may extract a specified feature quantity from an image captured by the camera and determine the driver state based on the feature quantity. Examples of the feature quantity include a positional relationship between the driver and the driver's seat 15 in the image, the posture of the driver, and the like.

### <Travel System 50>

The travel system 50 causes the vehicle body 11 to travel. The travel system 50 includes an engine 51, an output shaft 53, a rotation speed sensor 54, a driving force transmitting mechanism 60, a differential 70, an axle 71, a vehicle speed sensor 72, and a travel controller 73. The industrial vehicle 10 is a vehicle having an engine.

### <Engine 51>

The engine 51 is a drive source for traveling operation and cargo handling operation of the industrial vehicle 10. The engine 51 of the present embodiment is a gasoline engine, which uses gasoline as fuel. The engine 51 includes a throttle actuator 52. The fuel of the engine 51 is not limited to gasoline, and may be, for example, liquefied petroleum gas (LPG) or compressed natural gas (CNG). The engine 51 is not limited to a gasoline engine, and may be a diesel engine, for example.

### <Throttle Actuator 52>

The throttle actuator 52 adjusts a throttle opening degree. The throttle actuator 52 adjusts the throttle opening degree to adjust the amount of air supplied to the engine 51. Accordingly, the rotation speed of the engine 51 is controlled.

### <Output Shaft 53>

The output shaft 53 is coupled to the engine 51. The output shaft 53 rotates when driven by the engine 51.

### <Rotation Speed Sensor 54>

The rotation speed sensor 54 is provided at the output shaft 53. The rotation speed sensor 54 detects the rotation speed of the engine 51. The rotation speed of the engine 51 is also the rotation speed of the output shaft 53. The rotation speed sensor 54 outputs an electric signal corresponding to the rotation speed of the output shaft 53 to the travel controller 73.

### <Driving Force Transmitting Mechanism 60>

The driving force transmitting mechanism 60 transmits the driving force of the engine 51 to the driven wheels 12, 13. The driving force transmitting mechanism 60 includes a torque converter 61, a transmission 62, and two electromagnetic valves 69.

### <Torque Converter 61>

The torque converter 61 is coupled to the output shaft 53. The driving force of the engine 51 is transmitted to the torque converter 61 via the output shaft 53. The torque converter 61 includes a pump and turbine that are coupled to the output shaft 53. In the torque converter 61, the turbine is rotated by hydraulic oil discharged from the pump.

### <Transmission 62>

The transmission 62 includes an input shaft 63, a forward clutch 64, a forward gear train 65, a reverse clutch 66, a reverse gear train 67, and an output shaft 68.

### <Input Shaft 63>

The input shaft 63 is coupled to the torque converter 61. The driving force is transmitted from the torque converter 61 to the transmission 62 via the input shaft 63.

### <Forward Clutch 64 and Forward Gear Train 65>

The forward clutch 64 is provided at the input shaft 63. The forward gear train 65 is provided between the forward clutch 64 and the output shaft 68. The forward clutch 64 is switched between an engaged state and a disengaged state. The engaged state is a state in which the input shaft 63 and the forward gear train 65 are connected to each other. The disengaged state is a state in which the input shaft 63 and the forward gear train 65 are disconnected from each other. When the forward clutch 64 connects the input shaft 63 and the forward gear train 65 to each other, the driving force is transmitted from the input shaft 63 to the forward gear train 65. The driving force transmitted to the forward gear train 65 is then transmitted to the output shaft 68. When the forward clutch 64 is connected to the forward gear train 65, the driving force of the engine 51 is transmitted to the output shaft 68. When the forward clutch 64 and the forward gear train 65 are disconnected from each other, the driving force is not transmitted from the input shaft 63 to the forward gear train 65.

### <Reverse Clutch 66 and Reverse Gear Train 67>

The reverse clutch 66 is provided at the input shaft 63. The reverse gear train 67 is provided between the reverse clutch 66 and the output shaft 68. The reverse clutch 66 is switched between an engaged state and a disengaged state. The engaged state is a state in which the input shaft 63 and the reverse gear train 67 are connected to each other. The disengaged state is a state in which the input shaft 63 and the reverse gear train 67 are disconnected from each other. When the reverse clutch 66 connects the input shaft 63 and the reverse gear train 67 to each other, the driving force is transmitted from the input shaft 63 to the reverse gear train 67. The driving force transmitted to the reverse gear train 67 is then transmitted to the output shaft 68. When the reverse clutch 66 is connected to the reverse gear train 67, the driving force of the engine 51 is transmitted to the output shaft 68. When the reverse clutch 66 and the reverse gear train 67 are disconnected from each other, the driving force is not transmitted from the input shaft 63 to the reverse gear train 67.

The forward clutch 64 and the reverse clutch 66 are hydraulic clutches. The hydraulic clutches may be wet multi-disc clutches.

### <Output Shaft 68>

The output shaft 68 receives the driving force when the forward clutch 64 or the reverse clutch 66 is engaged. The output shaft 68 is rotated by the driving force transmitted from the forward clutch 64 or the reverse clutch 66.

### <Electromagnetic Valves 69>

The two electromagnetic valves 69 correspond to the forward clutch 64 and the reverse clutch 66, respectively. The electromagnetic valves 69 control supply and discharge of hydraulic oil to and from the forward clutch 64 and the reverse clutch 66. The electromagnetic valves 69 supply or discharge hydraulic oil in accordance with the amount of electricity supplied to the solenoids. The clutches 64, 66 are respectively switched between the engaged state and the disengaged state of by supply and discharge of hydraulic oil by the electromagnetic valves 69. When the direction instructing unit 17 instructs a forward movement, the forward clutch 64 and the forward gear train 65 are connected to each other. When the direction instructing unit 17 instructs a backward movement, the reverse clutch 66 and the reverse gear train 67 are connected to each other. When the direction instructing unit 17 instructs a neutral state, that is, when the direction instructing unit 17 is in the neutral position, the forward clutch 64 and the reverse clutch 66 are both disengaged. When one of the forward clutch 64 and the reverse clutch 66 is engaged, resistance is produced in the engine 51 due to engine braking. In contrast, when the forward clutch 64 and the reverse clutch 66 are both disengaged, no resistance is produced in the engine 51 due to engine braking.

The electromagnetic valve 69 is configured to be controlled by the controller 31. The controller 31 controls the amount of electricity to the solenoids in the electromagnetic valves 69, thereby controlling supply and discharge of hydraulic oil by the electromagnetic valve 69.

### <Differential 70 and Axle 71>

The differential 70 is coupled to the output shaft 68. The axle 71 is coupled to the differential 70. The driven wheels 12, 13 are coupled to the axle 71. The axle 71 rotates as the output shaft 68 rotates. The industrial vehicle 10 travels when the driven wheels 12, 13 are rotated by rotation of the axle 71. When the forward clutch 64 and the forward gear train 65 are connected to each other, the industrial vehicle 10 moves forward. When the reverse clutch 66 and the reverse gear train 67 are connected to each other, the industrial vehicle 10 moves backward.

### <Vehicle Speed Sensor 72>

The vehicle speed sensor 72 is a sensor for detecting a vehicle speed, that is, a moving speed of the vehicle body 11. The moving speed of the vehicle body 11 is regarded as the traveling speed of the industrial vehicle 10. The vehicle speed sensor 72 is provided, for example, at the output shaft 68 or the axle 71. The vehicle speed sensor 72 outputs a pulse signal corresponding to the vehicle speed to the travel controller 73.

### <Travel Controller 73>

The travel controller 73 is an engine control unit that controls the engine 51. The hardware configuration of the travel controller 73 is, for example, similar to that of the controller 31. The travel controller 73 adjusts the throttle opening degree by controlling the throttle actuator 52. The driving force of the engine 51 is adjusted by adjusting the throttle opening degree. The travel controller 73 controls the electromagnetic valve 69 that switches the clutches 64, 66 between the engaged state and the disengaged state. Accordingly, the clutches 64, 66 is switched between the engaged state and the disengaged state.

The travel controller 73 and the controller 31 are configured to obtain information from each other via the bus 40. The controller 31 transmits a specified command signal via the bus 40. In this manner, the controller 31 controls the engine 51 via the travel controller 73. The command signal is, for example, a target value of the torque or the rotation speed of the engine 51. The target value is determined, for example, in accordance with operation of the accelerator 16. The travel controller 73 of the present embodiment controls the throttle actuator 52 such that the rotation speed of the engine 51 detected by the rotation speed sensor 54 becomes the target value. Accordingly, the engine 51 generates driving force. The driving force of the engine 51 accelerates the industrial vehicle 10. Therefore, the accelerator 16 is regarded as a device that instructs acceleration by the driving force of the engine 51 in response to operation by the driver.

Further, the controller 31 is capable of acquiring the rotation speed of the engine 51 detected by the rotation speed sensor 54 via the bus 40 and the travel controller 73.

### <Operation Mode M>

The controller 31 sets the operation mode M based on the driver state detected by the driver detecting unit 36. The operation mode M includes a normal mode M1, a limit mode M2, and an interruption mode M3.

### <Normal Mode M1>

The normal mode M1 is a mode in which the industrial vehicle 10 travels in response to operation by the driver. In the normal mode M1, the industrial vehicle 10 is accelerated in accordance with an operated amount of the accelerator 16. That is, the normal mode M1 is an operation mode M in which acceleration of the industrial vehicle 10 is controlled by operation of the accelerator 16. In the normal mode M1, the solenoid of the electromagnetic valve 69 is energized in response to operation of the direction instructing unit 17. As a result, the electromagnetic valve 69 supplies or discharges hydraulic oil in accordance with operation of the direction instructing unit 17. The operation mode M when the industrial vehicle 10 is activated, that is, the initial state of the operation mode M is the normal mode M1.

### <Limit Mode M2>

The limit mode M2 is a mode in which the driving force of the engine 51 is limited. In the limit mode M2, the controller 31 limits the target value of the rotation speed of the engine 51 up to a specified limit value. Accordingly, acceleration of the industrial vehicle 10 by the accelerator 16 is limited. That is, the limit mode M2 is an operation mode M in which acceleration of the industrial vehicle 10 by the accelerator 16 is limited. The limit value is, for example, the rotation speed of the engine 51 during idling. The controller 31 transmits the target value of the rotation speed to the travel controller 73. When the target value that corresponds to the operated amount of the accelerator 16 is greater than the limit value, the controller 31 sets the target value of the rotation speed to the limit value. The travel controller 73 controls the engine 51 such that the rotation speed of the engine 51 becomes the target value transmitted from the controller 31.

The target value of the rotation speed of the engine 51 may be set to the limit value in the normal mode M1. In this case, the limit value in the limit mode M2 is less than the limit value in the normal mode M1. The limit mode M2 is an operation mode M in which the limit value of the rotation speed of the engine 51 is less than that in the normal mode M1. In other words, the normal mode M1 is an operation mode M in which the limit value is greater than that in the limit mode M2.

In the limit mode M2, the solenoid of the electromagnetic valve 69 is energized in response to operation of the direction instructing unit 17. As a result, the electromagnetic valve 69 supplies or discharges hydraulic oil in accordance with operation of the direction instructing unit 17.

### <Interruption Mode M3>

The interruption mode M3 is a mode in which the transmission of the driving force to the driven wheels 12, 13 by the driving force transmitting mechanism 60 is interrupted. In the interruption mode M3, the controller 31 stops energizing the solenoid of the electromagnetic valve 69. Accordingly, the supply of hydraulic oil to the clutches 64, 66 is stopped. Therefore, unlike the normal mode M1 or the limit mode M2, the clutches 64, 66 are both disengaged in the interruption mode M3 regardless of the operated direction of the direction instructing unit 17. When the clutches 64, 66 are both disengaged, the driving force from the engine 51 to the driven wheels 12, 13 is interrupted by the driving force transmitting mechanism 60. Accordingly, in the interruption mode M3, the driving force is not transmitted from the engine 51 to the driven wheels 12, 13 even though the engine 51 is running. The interruption mode M3 is thus an operation mode M in which the industrial vehicle 10 cannot be accelerated by operation of the accelerator 16. In the interruption mode M3, since the transmission of the driving force by the driving force transmitting mechanism 60 is interrupted, creep does not occur.

### <Travel Controlling Process>

The controller 31 performs a travel controlling process for controlling the travel of the industrial vehicle 10 based on the operation mode M. One example of the travel controlling process will now be described. The travel controlling process of the present embodiment is repeatedly performed while the industrial vehicle 10 is activated.

### <Step S1>

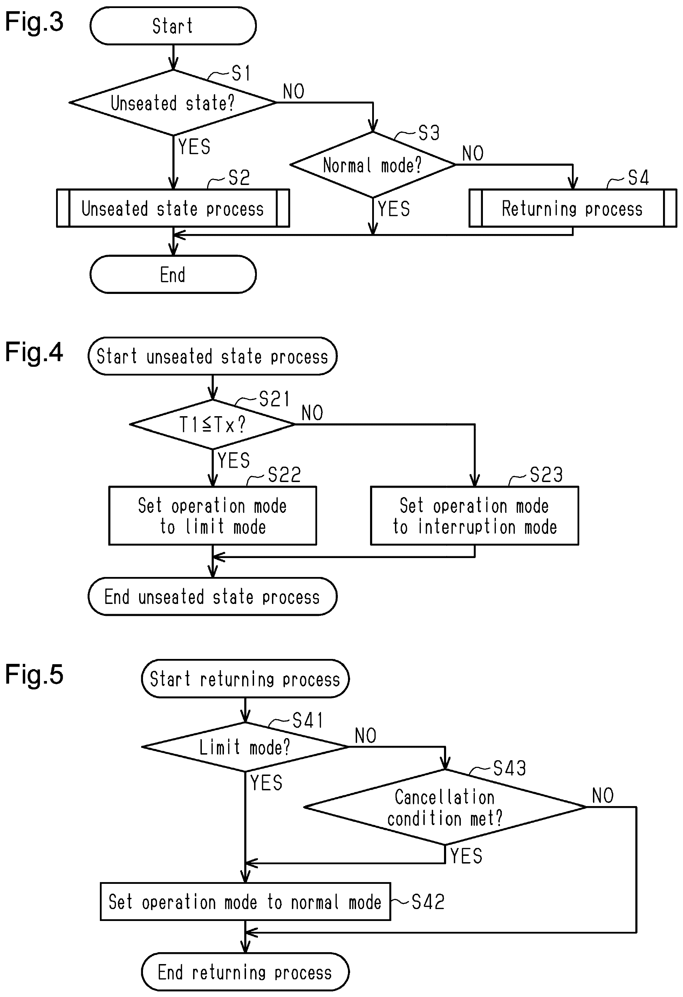

As shown in Fig. 3, the controller 31 determines whether the driver state is the unseated state in step S1. This determination is made based on, for example, a detection result of the driver detecting unit 36.

### <Step S2>

If the determination result in step S1 is affirmative, that is, if the driver state is the unseated state, the process of step S2 is performed. In step S2, the controller 31 performs an unseated state process. The unseated state process is a process for setting the operation mode M when the driver state is the unseated state. After the unseated state process ends, the controller 31 ends the travel controlling process and restarts the travel controlling process from step S1.

The controller 31 of the present embodiment performs the unseated state process when an unseated state duration T1 becomes longer than or equal to a specified suspension time Td. The unseated state duration T1 is a period during which the unseated state continues. Specifically, the unseated state duration T1 is a time period during which the unseated state continues from the time at which the driver detecting unit 36 detects the unseated state. The suspension time Td may be set freely. For example, the suspension time Td is 0.5 seconds or shorter, preferably 0.2 seconds or shorter. When the unseated state duration T1 is shorter than the suspension time Td, the controller 31 omits the unseated state process and ends the travel controlling process.

### <Unseated State Process>

An example of the unseated state process in step S2 will now be described.

### <Step S21>

As shown in Fig. 4, the controller 31 determines whether the unseated state duration T1 is shorter than or equal to a specified unseated state determination time Tx in step S21. The unseated state determination time Tx can be set arbitrarily based on expected manners in which the unseated state occurs. The unseated state determination time Tx may be set arbitrarily as long as it is longer than the suspension time Td, and is, for example, 1 second or longer and 5 seconds or shorter, and preferably 1.5 seconds or longer and 3 seconds or shorter. The controller 31 performing the process of step S21 corresponds to an unseated state determining unit of the present embodiment.

### <Step S22>

In a case in which the determination result in step S21 is affirmative, the process of step S22 is performed. The case in which the determination result in step S21 is affirmative corresponds to a case in which the unseated state duration T1 is determined to be shorter than or equal to the unseated state determination time Tx. In step S22, the controller 31 sets the operation mode M to the limit mode M2. In this case, the controller 31 changes the operation mode M from the normal mode M1 to the limit mode M2. The controller 31 performing the process of step S22 corresponds to a limit setting unit of the present embodiment.

### <Step S23>

In a case in which the determination result in step S21 is negative, the process of step S23 is performed. The case in which the determination result in step S21 is negative corresponds to a case in which the controller 31, which serves as the unseated state determining unit, determines that the unseated state duration T1 is longer than the unseated state determination time Tx. In step S23, the controller 31 sets the operation mode M to the interruption mode M3. In this case, the controller 31 changes the operation mode M from the limit mode M2 to the interruption mode M3. The controller 31 performing the process of step S23 corresponds to an interruption setting unit of the present embodiment.

After the process of step S22 or step S23, the controller 31 ends the unseated state process.

### <Step S3>

If the determination result in step S1 is negative, that is, if the driver state is the seated state, the process of step S3 is performed as shown in Fig. 3. In step S3, the controller 31 determines whether the operation mode M is the normal mode M1.

If the determination result in step S3 is affirmative, the controller 31 ends the travel controlling process while maintaining the operation mode M at the normal mode M1. That is, if the industrial vehicle 10 is traveling in the normal mode M1 with the driver state being the seated state, the travel in the normal mode M1 is continued.

### <Step S4>

In a case in which the determination result in step S3 is negative, the process of step S4 is performed. The case in which the determination result in step S3 is negative corresponds to a case in which the operation mode M is set to the limit mode M2 or the interruption mode M3. A situation that corresponds to such a case includes, for example, a situation in which the limit mode M2 or the interruption mode M3 is set by the unseated state process in step S2 performed in the past, and is maintained. In step S4, the controller 31 performs the returning process. The returning process is a process for setting, to the normal mode M1 again, the operation mode M that has been set to the limit mode M2 or the interruption mode M3. After the returning process ends, the controller 31 ends the travel controlling process and restarts the travel controlling process from step S1.

### <Returning Process>

An example of the returning process in step S4 will now be described.

### <Step S41>

As shown in Fig. 5, the controller 31 determines whether the operation mode M is set to the limit mode M2 in step S41.

### <Step S42>

If the determination result in step S41 is affirmative, that is, if the operation mode M is set to the limit mode M2, the process of step S42 is performed. In step S42, in a case in which the operation mode M is set to the limit mode M2, the controller 31 sets the operation mode M to the normal mode M1 when the driver state detected by the driver detecting unit 36 becomes the seated state. In order to perform the process of step S42 in the present embodiment, it suffices if the driver state is switched from the unseated state to the seated state, and the accelerator 16 or the direction instructing unit 17 does not necessarily need to be operated. In this case, the controller 31 changes the operation mode M from the limit mode M2 to the normal mode M1.

The time at which the controller 31 changes the operation mode M from the limit mode M2 to the normal mode M1 is not limited to the time at which the driver detecting unit 36 detects the seated state. For example, the controller 31 may change the operation mode M from the limit mode M2 to the normal mode M1 when a specified suspension time elapses after the driver detecting unit 36 detects the seated state.

### <Step S43>

If the determination result in step S41 is negative, that is, if the operation mode M is set to the interruption mode M3, the process of step S43 is performed. In step S43, the controller 31 determines whether a specified cancellation condition is met. The cancellation condition is a condition that needs to be met in order to reset the operation mode M to the normal mode M1. The cancellation condition includes a condition in which the driver state is the seated state and a condition in which the direction detecting unit 35 has detected a change in an operation position. The condition in which the direction detecting unit 35 has detected a change in the operation position refers to a condition in which the operated direction of the direction instructing unit 17 has been changed.

In a case in which the determination result in step S43 is affirmative, that is, in a case in which the cancellation condition is met, the process of step S42 is performed. The case in which the cancellation condition is met includes a case in which the driver state is the seated state and the direction detecting unit 35 has detected a change in the operation position. In step S42, the controller 31 sets the operation mode M to the normal mode M1. If the controller 31 performs the process of step S42 in the returning process, the controller 31 changes the operation mode M from the interruption mode M3 to the normal mode M1 in step S42.

If the determination result in step S43 is negative, that is, if the cancellation condition is not met, the controller 31 omits step S42 and ends the returning process. Therefore, the operation mode M is maintained at the interruption mode M3.

### <Operation>

Operation of the present embodiment will now be described.

The driver may become unseated from the driver's seat 15 while the industrial vehicle 10 is traveling in the normal mode M1. Such an unseated state occurs, for example, when the driver checks the surrounding situation. Particularly, in the industrial vehicle 10 such as a forklift, the cargo handling device 20 or a cargo mounted on the cargo handling device 20 may block the forward field of vision from the driver's seat 15. Therefore, even in a situation in which the industrial vehicle 10 is traveling, the driver may stand up from the driver's seat 15 in order to check the situation in front of the industrial vehicle 10. In this case, the driver detecting unit 36 detects that the driver state has become the unseated state. Accordingly, the determination result in step S1 is affirmative, and the unseated state process is performed in step S2.

At least immediately after the driver becomes unseated from the driver's seat 15, the unseated state duration T1 is shorter than or equal to the unseated state determination time Tx. Accordingly, the determination result in step S21 is affirmative, and the operation mode M is changed to the limit mode M2 in step S22. Specifically, the operation mode M is changed from the normal mode M1 to the limit mode M2. Thus, the target value of the rotation speed of the engine 51 transmitted from the controller 31 to the travel controller 73 is lower than that in the normal mode M1. Accordingly, the rotation speed of the engine 51 is reduced. At this time, the transmission of the driving force by the driving force transmitting mechanism 60 is not interrupted. Therefore, in the limit mode M2, the resistance of the engine 51 due to engine braking is transmitted to the driven wheels 12, 13 via the driving force transmitting mechanism 60 as in the normal mode M1.

If the driver continues being unseated after the operation mode M is set to the limit mode M2, the unseated state duration T1 becomes longer than the unseated state determination time Tx. In this case, the determination result in step S21 is negative. The controller 31 thus sets the operation mode M to the interruption mode M3 in step S23. Specifically, the controller 31 changes the operation mode M from the limit mode M2 to the interruption mode M3. Accordingly, the controller 31 stops energizing the solenoid of the electromagnetic valve 69 and interrupts the transmission of the driving force by the driving force transmitting mechanism 60. As a result, in the interruption mode M3, unlike the cases of the normal mode M1 or the limit mode M2, the resistance of the engine 51 due to engine braking is not transmitted to the driven wheels 12, 13.

### <Advantages>

The present embodiment has the following advantages.

(1-1) The operation mode M includes the normal mode M1, the limit mode M2, which limits the driving force of the engine 51, and the interruption mode M3, which interrupts the transmission of the driving force by the driving force transmitting mechanism 60. If it is determined in step S21 that the unseated state duration T1 is shorter than or equal to the unseated state determination time Tx, the controller 31 performs the process of step S22 to set the operation mode M to the limit mode M2. If it is determined in step S21 that the unseated state duration T1 is longer than the unseated state determination time Tx, the controller 31 performs the process of step S23 to set the operation mode M to the interruption mode M3.

With this configuration, even if the driver becomes unseated from the driver's seat 15 so that the driver state is the unseated state, the controller 31 sets the operation mode M to the limit mode M2 if the unseated state duration T1 is shorter than or equal to the unseated state determination time Tx. At this time, the driving force is limited without the transmission of the driving force being interrupted if the duration of the unseated state is short, that is, if the unseated state duration T1 is shorter than or equal to the unseated state determination time Tx. If the unseated state continues after the operation mode M is set to the limit mode M2 so that the unseated state duration T1 becomes longer than the unseated state determination time Tx, the operation mode M, which has been set to the limit mode M2, is set to the interruption mode M3.

Accordingly, the transmission of the driving force is interrupted after the driving force is limited in the limit mode M2.

As a result, a change in the operational feeling of the industrial vehicle 10 due to the driver becoming unseated from the driver's seat 15 is reduced as compared to a case in which the operation mode M, which has been set to the normal mode M1, is set to the interruption mode M3 without being set to the limit mode M2. As such, the driving comfort of the industrial vehicle 10 is prevented from being reduced.

(1-2) In a case in which the operation mode M is set to the limit mode M2, the controller 31 performs the process of step S42 to set the operation mode M to the normal mode M1 when the driver state detected by the driver detecting unit 36 becomes the seated state.

With this configuration, even in a case in which the operation mode M is set to the limit mode M2, the operation mode M returns to the normal mode M1 through a simple operation of, for example, the driver sitting on the driver's seat 15 again. Therefore, it is easy to return the operation mode M from the limit mode M2 to the normal mode M1.

(1-3) When the operation mode M is set to the interruption mode M3, the controller 31 determines whether the driver state is the seated state in step S43 and whether the direction detecting unit 35 has detected a change in the operated direction of the direction instructing unit 17. When the determination result in step S43 is affirmative, the controller 31 performs the process of step S42 to set the operation mode M to the normal mode M1.

With this configuration, when the transmission of the driving force is interrupted in the interruption mode M3, the driver needs to sit on the driver's seat 15 in order to return the operation mode M to the normal mode M1. In addition to this, in order to return the operation mode M to the normal mode M1, it is necessary to change the operation position by operating the direction instructing unit 17. Thus, the operation mode M can be returned to the normal mode M1 not only when the driver is seated, but also when the driver indicates their intention to continue driving the industrial vehicle 10 by operating the direction instructing unit 17. This reduces the possibility that the operation mode M will be returned to the normal mode M1 without the driver's intention of driving the industrial vehicle 10, so the safety of the industrial vehicle 10 is improved.

### <Embodiment of the invention, also referred to as second Embodiment>

An industrial vehicle 10 according to a second embodiment will now be described. The same reference numerals are given to those components in the second embodiment that are the same as the corresponding components of the first embodiment, and redundant explanations may be omitted.

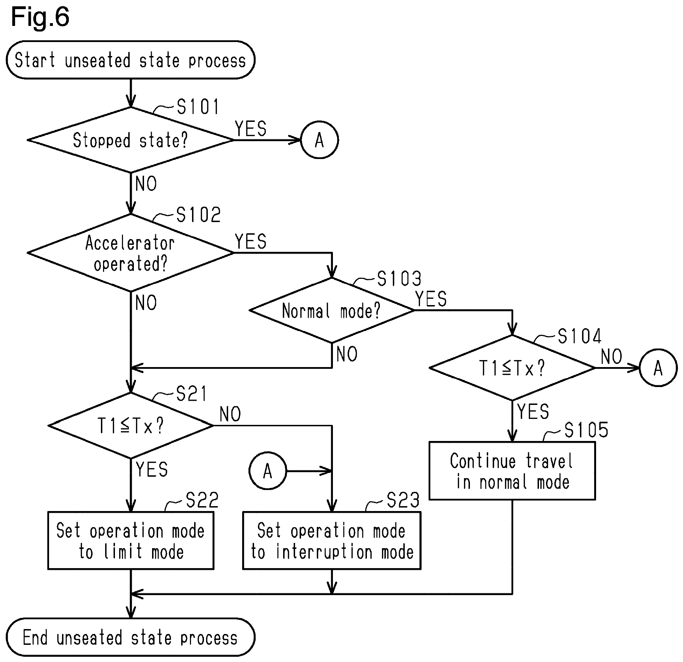

As shown in Fig. 6, part of the sequence of the unseated state process is different between the first embodiment and the second embodiment. One example of the unseated state process according to the second embodiment will now be described.

### <Step S101>

In step S101, the controller 31 determines whether the industrial vehicle 10 is in a stopped state. The controller 31 performing the process of step S101 corresponds to a stopped state determining unit of the present embodiment. The controller 31 of the present embodiment determines whether the industrial vehicle 10 is in a stopped state based on the vehicle speed detected by the vehicle speed sensor 72. When the vehicle speed detected by the vehicle speed sensor 72 is greater than a specified speed threshold, the controller 31 determines that the industrial vehicle 10 is traveling. When the vehicle speed is lower than or equal to the speed threshold, the controller 31 determines that the industrial vehicle 10 is in a stopped state. The determination of whether the industrial vehicle 10 is traveling or in a stopped state is not limited to the method described above, and any method can be employed. For example, the controller 31 may perform the determination based on a detection result of the rotation speed sensor 54.

In a case in which the determination result in step S101 is affirmative, the process of step S23 is performed. The case in which the determination result in step S101 is affirmative corresponds to a case in which the unseated state is detected while the industrial vehicle 10 is in a stopped state. In step S23, the controller 31 sets the operation mode M to the interruption mode M3. In this case, the controller 31 changes the operation mode M from the normal mode M1 to the interruption mode M3. The controller 31 performing the processes of step S101 and step S23 corresponds to a forcible interruption unit of the present embodiment.

### <Step S102>

If the determination result in step S101 is negative, that is, if it is determined that the industrial vehicle 10 is traveling, the process of step S102 is performed. In step S102, the controller 31 determines whether the accelerator 16 is being operated. Whether the accelerator 16 is being operated is used as an index indicating whether the driver has an intention to drive the industrial vehicle 10.

If the determination result in step S102 is negative, that is, if it is determined that the accelerator 16 is not being operated, the process of step S21 is performed. Thus, if the unseated state is detected in a situation in which the accelerator 16 is not being operated in the normal mode M1, the operation mode M is changed from the normal mode M1 to the limit mode M2 in step S22, or the operation mode M is changed from the normal mode M1 to the interruption mode M3 in step S23.

### <Step S103>

If the determination result in step S102 is affirmative, that is, if the accelerator 16 is being operated, the process of step S103 is performed. In step S103, the controller 31 determines whether the operation mode M is the normal mode M1.

If the determination result in step S103 is negative, that is, if the operation mode M is the limit mode M2 or the interruption mode M3, the process of step S21 is performed. In this manner, the controller 31 sets the operation mode M to the limit mode M2 or the interruption mode M3 in accordance with the unseated state duration T1.

### <Step S104>

In a case in which the determination result in step S103 is affirmative, the process of step S104 is performed. The case in which the determination result in step S103 is affirmative corresponds to a case in which the unseated state is detected while the accelerator 16 is being operated in the normal mode M1. The controller 31 determines whether the unseated state duration T1 is shorter than or equal to the unseated state determination time Tx in step S104.

In a case in which the determination result in step S104 is negative, the process of step S23 is performed. The case in which the determination result in step S104 is negative is, for example, a case in which the accelerator 16 has been operated for a period longer than the unseated state determination time Tx while the unseated state continues. In this case, the controller 31 sets the operation mode M to the interruption mode M3. Thus, it is possible to prevent the industrial vehicle 10 from traveling in the normal mode M1 for a long period of time while the unseated state continues.

### <Step S105>

In a case in which the determination result in step S104 is affirmative, the process of step S105 is performed. In step S105, the controller 31 continues the travel in the normal mode M1. In this case, the processes of Step S21 and Step S22 are omitted. Therefore, even in a case in which the unseated state is detected while the accelerator 16 is being operated in the normal mode M1, the controller 31 maintains the operation mode M at the normal mode M1 as long as the unseated state duration T1 is shorter than or equal to the unseated state determination time Tx. The controller 31 performing the processes of steps S103 to S105 corresponds to a travel continuing unit of the present embodiment.

### <Operation>

When the driver becomes unseated from the driver's seat 15 even if the industrial vehicle 10 is in a stopped state in the normal mode M1, the determination result in step S101 is affirmative, and the process of step S23 is performed. In step S23, the controller 31 sets the operation mode M to the interruption mode M3. In this case, the controller 31 changes the operation mode M from the normal mode M1 to the interruption mode M3. Therefore, if the driver becomes unseated from the driver's seat 15 while the industrial vehicle 10 is in a stopped state, the controller 31 omits the limitation of the driving force in the limit mode M2 and interrupts the transmission of the driving force by the driving force transmitting mechanism 60.

If the driver becomes unseated from the driver's seat 15 while the industrial vehicle 10 is traveling, the determination result in step S101 is negative, and the process of step S102 is performed. In this case, if the driver is operating the accelerator 16, the determination result in step S102 is affirmative, and the process of step S103 is performed. In this case, if the operation mode M is the normal mode M1, the determination result in step S103 is affirmative, and the process of step S105 is performed. In step S105, the controller 31 continues the traveling in the normal mode M1 even if the driver state is the unseated state.

### <Advantages>

The second embodiment has the following advantages.

(2-1) The controller 31 performs the process of step S101, in which it is determined whether the industrial vehicle 10 is in a stopped state, and the process of step S23, in which the operation mode M is set to the interruption mode M3 if the unseated state is detected while the industrial vehicle 10 is in a stopped state.

With this configuration, in a case in which the industrial vehicle 10 is in a stopped state, the operation mode M is set to the interruption mode M3 without performing the limit mode M2 even if the unseated state duration T1 is shorter than or equal to the unseated state determination time Tx. In the interruption mode M3, since the transmission of the driving force by the driving force transmitting mechanism 60 is interrupted, creep does not occur. Therefore, it is possible to prevent the industrial vehicle 10 in a stopped state from moving due to creep while the driver is unseated from the driver's seat 15.

(2-2) If the unseated state is detected while the accelerator 16 is being operated in the normal mode M1, the controller 31 performs the process of step S105, in which the travel in the normal mode M1 is continued.

If the accelerator 16 is being operated, there is a possibility that the driver has an intention to continue driving the industrial vehicle 10. Thus, even if the driver state is the unseated state, the driver can drive the industrial vehicle 10 in the normal mode M1 by operating the accelerator 16. Therefore, it is possible to further improve the driving comfort of the industrial vehicle 10 by reflecting the intention of the driver to continue driving the industrial vehicle 10.

### <Modifications>

The above-described embodiments may be modified as described below. The above-described embodiments and the following modifications can be combined as long as the combined modifications remain technically consistent with each other.

The travel controlling processes described in the background art and second embodiment are merely examples, and the present disclosure is not limited to these.

In the background art and in the embodiment, the process of step S41 may be omitted. In this case, for example, the controller 31 executes the process of step S43 regardless of whether the operation mode M is the limit mode M2 or the interruption mode M3. Even in the case of the limit mode M2, the controller 31 sets the operation mode M to the normal mode M1 if the cancellation condition is met.

In other words, the trigger for changing the operation mode M from the limit mode M2 to the normal mode M1 is not limited to the fact that the driver state detected by the driver detecting unit 36 becomes the seated state.

The driver detecting unit 36 may be separate from or integrated with the controller 31. The driver detecting unit 36 may be a functioning unit that is implemented by the controller 31.

In the background art and in the embodiment, the cancellation condition does not necessarily need to include a condition in which the driver state is the seated state and a condition in which the direction detecting unit 35 has detected a change in the operation position. For example, the cancellation condition may be met when a cancellation button provided in the industrial vehicle 10 is operated.

In the background art and in the embodiment, the trigger for performing the process of step S42, which sets the operation mode M to the normal mode M1 in a case in which the operation mode M is set to the limit mode M2, is not limited to the fact that the driver state becomes the seated state, but may be changed. For example, the trigger may be the same as the cancellation condition in step S43.

In the background art and in the embodiment, the normal mode M1 does not necessarily need to be defined explicitly. For example, an operation mode M other than the limit mode M2 and the interruption mode M3 may be defined as the normal mode M1.

In the background art and in the embodiment, the industrial vehicle 10 may include a seat belt, a buckle connected to the seat belt, and a seat belt use sensor. The seat belt, the buckle, and the seat belt use sensor are not shown in the drawings. The seat belt, the buckle, and the seat belt use sensor are attached to the driver's seat 15.

The seat belt use sensor is configured to detect whether the driver is using the seat belt. For example, the seat belt use sensor includes a switch. For example, the switch of the seat belt use sensor is turned ON when the seat belt is fastened to the buckle, and is turned OFF when the seat belt is not fastened to the buckle. The specific configuration of the seat belt use sensor is arbitrary, and may include, for example, a pressure sensitive sensor, an optical sensor, or a camera.

The driver detecting unit 36 may detect the driver state based on a detection result of the seat belt use sensor. For example, the driver detecting unit 36 determines that the driver state is the seated state in a case in which the seat belt use sensor is ON, and determines that the driver state is the unseated state in a case in which the seat belt use sensor is OFF.

Further, the driver detecting unit 36 may detect the driver state based on the detection result of the seat switch 18 and the detection result of the seat belt use sensor. For example, the driver detecting unit 36 determines that the driver state is the seated state in a case in which the seat belt use sensor is turned ON after the seat switch 18 is turned ON. This configuration promotes the driving of the industrial vehicle 10 with the seat belt being used properly.

On the other hand, the driver detecting unit 36 determines that the driver state is the unseated state in a case in which the seat switch 18 is OFF, in a case in which the seat belt use sensor is OFF, or in a case in which the seat belt use sensor is turned ON before the seat switch 18 is turned ON. The case in which the seat belt use sensor is turned ON before the seat switch 18 is turned ON includes, for example, a case in which the seat belt is fastened to the buckle before the driver sits on the driver's seat 15.

The information used by the driver detecting unit 36 to detect the driver state is not limited to the detection result of the seat switch 18, but may be changed.

In the background art and in the embodiment, the industrial vehicle 10 is not limited to a forklift. For example, the industrial vehicle 10 may be a towing tractor.

Various changes in form and details may be made to the examples above without departing from the scope of the claims. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope is defined by the claims and variations within the scope of the claims are included.

## Claims

1. An industrial vehicle (10), comprising:
an engine (51);
a driven wheel (12, 13);
a driving force transmitting mechanism (60) configured to transmit a driving force of the engine (51) to the driven wheel (12, 13);
a driver's seat (15) on which a driver is seated;
a driver detecting unit (36) configured to detect a driver state of driver states including an unseated state, in which the driver is unseated from the driver's seat (15), and a seated state, in which the driver is seated on the driver's seat (15);
an accelerator (16) that instructs acceleration by the driving force in response to operation by the driver; and
a controller (31) configured to set an operation mode of operation modes based on the driver state detected by the driver detecting unit (36), wherein
the operation modes include a normal mode, a limit mode that limits the driving force, and an interruption mode that interrupts a transmission of the driving force to the driven wheel (12, 13) by the driving force transmitting mechanism (60), and
the controller (31) includes:
an unseated state determining unit configured to determine, when the driver state is the unseated state, whether an unseated state duration, during which the unseated state continues, is shorter than or equal to a specified unseated state determination time;
a limit setting unit configured to set the operation mode to the limit mode; and
an interruption setting unit configured to set the operation mode to the interruption mode, wherein
under a condition that the accelerator (16) is not operated, or the accelerator (16) is being operated in the operation mode other than the normal mode,
the limit setting unit is configured to set the operation mode to the limit mode when the unseated state determining unit determines that the unseated state duration is shorter than or equal to the unseated state determination time, and
the interruption setting unit is configured to set the operation mode to the interruption mode when the unseated state determining unit determines that the unseated state duration is longer than the unseated state determination time,
the controller (31) includes a travel continuing unit that is configured to continue a travel in the normal mode if the unseated state is detected while the accelerator (16) is being operated in the normal mode.

2. The industrial vehicle (10) according to claim 1,
wherein the controller (31) is configured to set, in a case in which the operation mode is set to the limit mode, the operation mode to the normal mode when the driver state detected by the driver detecting unit (36) becomes the seated state.

3. The industrial vehicle (10) according to claim 1 or 2, further comprising:
a direction instructing unit (17) that instructs a traveling direction of the industrial vehicle (10) in accordance with an operated direction; and
a direction detecting unit (35) that detects the operated direction,
wherein the controller (31) is configured to set, when the operation mode is set to the interruption mode, the operation mode to the normal mode when the driver state is the seated state and the direction detecting unit (35) detects a change in the operated direction.

4. The industrial vehicle (10) according to any one of claims 1 to 3, wherein the controller (31) includes:
a stopped state determining unit configured to determine whether the industrial vehicle (10) is in a stopped state; and
a forcible interruption unit configured to set the operation mode to the interruption mode when the unseated state is detected while the industrial vehicle (10) is in a stopped state.

5. A method for controlling an industrial vehicle (10), the industrial vehicle (10) including an engine (51), a driven wheel (12, 13), a driving force transmitting mechanism (60) configured to transmit a driving force of the engine (51) to the driven wheel (12, 13), a driver's seat (15) on which a driver is seated, and an accelerator (16) that instructs acceleration by the driving force in response to operation by the driver, the method comprising:
detecting a driver state of driver states including an unseated state, in which the driver is unseated from the driver's seat (15), and a seated state, in which the driver is seated on the driver's seat (15); and
setting an operation mode of operation modes based on the detected driver state, wherein
the operation modes include a normal mode, a limit mode that limits the driving force, and an interruption mode that interrupts a transmission of the driving force to the driven wheel (12, 13) by the driving force transmitting mechanism (60), and
the setting the operation mode includes:
determining, when the driver state is the unseated state, whether an unseated state duration, during which the unseated state continues, is shorter than or equal to a specified unseated state determination time;
under a condition that the accelerator (16) is not operated, or the accelerator (16) is being operated in the operation mode other than the normal mode,
setting the operation mode to the limit mode when the unseated state duration is determined to be shorter than or equal to the unseated state determination time, and
setting the operation mode to the interruption mode when the unseated state duration is determined to be longer than the unseated state determination time; and
continuing a travel in the normal mode if the unseated state is detected while the accelerator (16) is being operated in the normal mode.

## Patentansprüche

1. Industriefahrzeug (10), umfassend:
einen Motor (51);
ein angetriebenes Rad (12, 13);
ein Antriebskraftübertragungsmechanismus (60), der konfiguriert ist, um eine Antriebskraft des Motors (51) auf das angetriebene Rad (12, 13) zu übertragen;
einen Fahrersitz (15) auf dem ein Fahrer sitzt;
eine Fahrererkennungseinheit (36), die konfiguriert ist, um einen Fahrerzustand aus Fahrerzuständen, einschließlich eines nicht sitzenden Zustands, bei dem der Fahrer vom Fahrersitz (15) entfernt ist, und eines sitzenden Zustands, bei dem der Fahrer auf dem Fahrersitz (15) sitzt; einem Gaspedal (16), das die Beschleunigung durch die Antriebskraft als Reaktion auf die Betätigung durch den Fahrer anweist; und einer Steuereinrichtung (31), die konfiguriert ist, um einen Betriebsmodus von Betriebsmodi basierend auf dem von der Fahrererkennungseinheit (36) erkannten Fahrerzustand einzustellen, wobei
die Betriebsmodi einen Normalmodus, einen Grenzmodus, der die Antriebskraft begrenzt, und einen Unterbrechungsmodus, der die Übertragung der Antriebskraft auf das angetriebene Rad (12, 13) durch den Antriebskraftübertragungsmechanismus (60) unterbricht, einschließen und
die Steuereinrichtung (31) einschließt:
einer Bestimmungseinheit für den nicht sitzenden Zustand, die konfiguriert ist, um, wenn der Fahrerzustand der nicht sitzende Zustand ist, zu bestimmen, ob eine Dauer des nicht sitzenden Zustands, während der der nicht sitzenden Zustand anhält, kürzer als oder gleich einer bestimmten Bestimmungszeit des nicht sitzenden Zustands ist;
eine Begrenzungseinheit, die konfiguriert ist, um den Betriebsmodus auf den Grenzmodus einzustellen; und
eine Unterbrechungseinstelleinheit, die konfiguriert ist, um den Betriebsmodus auf den Unterbrechungsmodus einzustellen, wobei
unter der Bedingung, dass das Gaspedal (16) nicht betätigt wird oder das Gaspedal (16) in einem anderen Betriebsmodus als dem normalen Modus betätigt wird,
die Begrenzungseinheit konfiguriert ist, um den Betriebsmodus auf den Grenzmodus einzustellen, wenn die Bestimmungseinheit für den nicht sitzenden Zustand bestimmt, dass die Dauer des nicht sitzenden Zustands kürzer als die oder gleich der Bestimmungszeit des nicht sitzenden Zustands ist, und
die Unterbrechungseinstelleinheit konfiguriert ist, um den Betriebsmodus auf den Unterbrechungsmodus einzustellen, wenn die Einheit zur Bestimmung des nicht sitzenden Zustands bestimmt, dass die Dauer des nicht sitzenden Zustands länger ist als die Bestimmungszeit des nicht sitzenden Zustands,
die Steuereinrichtung (31) eine Fahrtfortsetzungseinheit einschließt, die konfiguriert ist, um eine Fahrt im Normalmodus fortzusetzen, wenn der nicht sitzende Zustand erkannt wird, während das Gaspedal (16) im Normalmodus betätigt wird.

2. Industriefahrzeug (10) nach Anspruch 1, wobei die Steuereinrichtung (31) konfiguriert ist, um in einem Fall, in dem der Betriebsmodus auf den Grenzmodus eingestellt ist, den Betriebsmodus auf den Normalmodus einzustellen, wenn der von der Fahrererkennungseinheit (36) erkannte Fahrerzustand der Sitzzustand ist.

3. Industriefahrzeug (10) nach Anspruch 1 oder 2, weiter umfassend:
eine Richtungsanweisungseinheit (17), die eine Fahrtrichtung des Industriefahrzeugs (10) gemäß einer betätigten Richtung anweist; und
eine Richtungserkennungseinheit (35), die die betätigte Richtung erkennt,
wobei die Steuereinrichtung (31) konfiguriert ist, um, wenn der Betriebsmodus auf den Unterbrechungsmodus eingestellt ist, den Betriebsmodus auf den normalen Modus einzustellen, wenn der Fahrerzustand der Sitzzustand ist und die Richtungserfassungseinheit (35) eine Änderung der betätigten Richtung erfasst.

4. Industriefahrzeug (10) nach einem der Ansprüche 1 bis 3, wobei die Steuereinrichtung (31) einschließt:
eine angehaltene Zustandsbestimmungseinheit, die konfiguriert ist, um zu bestimmen, ob sich das Industriefahrzeug (10) in einem angehaltenen Zustand befindet; und
eine Einheit zur gewaltsamen Unterbrechung, die konfiguriert ist, um den Betriebsmodus auf den Unterbrechungsmodus einzustellen, wenn der nicht sitzende Zustand erkannt wird, während sich das Industriefahrzeug (10) in einem angehaltenen Zustand befindet.

5. Verfahren zum Steuern eines Industriefahrzeugs (10), das Industriefahrzeug (10) einschließend einen Motor (51), ein angetriebenes Rad (12, 13), eine Antriebskraftübertragungsmechanismus (60), der konfiguriert ist, um eine Antriebskraft des Motors (51) auf das angetriebene Rad (12, 13) zu übertragen, ein Fahrersitz (15), auf dem ein Fahrer sitzt, und ein Gaspedal (16), das durch die Antriebskraft in Reaktion auf die Betätigung durch den Fahrer eine Beschleunigung anweist, das Verfahren umfassend:
Erkennen eines Fahrerzustands von Fahrerzuständen einschließlich eines nicht sitzenden Zustands, bei dem der Fahrer auf dem Fahrersitz (15) nicht sitzt, und eines sitzenden Zustands, bei dem der Fahrer auf dem Fahrersitz sitzt (15); und
Festlegen eines Betriebsmodus von Betriebsmodi basierend auf dem erkannten Fahrerzustand, wobei
die Betriebsmodi einen Normalmodus, einen Grenzmodus, der die Antriebskraft begrenzt, und einen Unterbrechungsmodus, der die Übertragung der Antriebskraft auf das angetriebene Rad (12, 13) durch den Antriebskraftübertragungsmechanismus (60) unterbricht, einschließen und
das Einstellen des Betriebsmodus umfasst:
Bestimmen, wenn der Fahrerzustand der nicht sitzende Zustand ist, ob eine Dauer des nicht sitzenden Zustands, während der nicht sitzende Zustand anhält, kürzer als oder gleich einer festgelegten Bestimmungszeit des nicht sitzenden Zustands ist;
unter der Bedingung, dass das Gaspedal (16) nicht betätigt wird oder das Gaspedal (16) in einem anderen Betriebsmodus als dem normalen Modus betätigt wird,
Einstellen des Betriebsmodus auf den Grenzmodus, wenn die Dauer des nicht gesetzten Zustands kürzer als oder gleich der Bestimmungszeit des nicht sitzenden Zustands ist, und
Einstellen des Betriebsmodus auf den Unterbrechungsmodus, wenn die Dauer des nicht sitzenden Zustands als länger als die Bestimmungszeit des nicht sitzenden Zustands bestimmt wird; und
Fortsetzen einer Fahrt im Normalmodus, wenn der nicht sitzende Zustand erkannt wird, während das Gaspedal (16) im Normalmodus betätigt wird.

## Revendications

1. Véhicule industriel (10), comprenant :
un moteur (51) ;
une roue motrice (12, 13) ;
un mécanisme de transmission de force motrice (60) configuré pour transmettre une force motrice du moteur (51) à la roue motrice (12, 13) ;
un siège conducteur (15) sur lequel un conducteur est assis ;
une unité de détection de conducteur (36) configurée pour détecter un état de conducteur parmi des états de conducteur incluant un état non assis, dans lequel le conducteur est non assis sur le siège conducteur (15), et un état assis, dans lequel le conducteur est assis sur le siège conducteur (15) ;
un accélérateur (16) qui donne l'instruction d'une accélération par la force motrice en réponse à un actionnement par le conducteur ; et
un dispositif de commande (31) configuré pour régler un mode de fonctionnement parmi des modes de fonctionnement sur la base de l'état de conducteur détecté par l'unité de détection de conducteur (36), dans lequel
les modes de fonctionnement incluent un mode normal, un mode limite qui limite la force motrice, et un mode d'interruption qui interrompt une transmission de la force motrice à la roue motrice (12, 13) par le mécanisme de transmission de force motrice (60), et
le dispositif de commande (31) inclut :
une unité de détermination d'état non assis configurée pour déterminer, lorsque l'état de conducteur est l'état non assis, si oui ou non une durée d'état non assis, pendant laquelle l'état non assis continue, est inférieure ou égale à un temps de détermination d'état non assis spécifié ;
une unité de réglage de limite configurée pour régler le mode de fonctionnement sur le mode limite ; et
une unité de réglage d'interruption configurée pour régler le mode de fonctionnement sur le mode d'interruption, dans lequel
dans une condition où l'accélérateur (16) n'est pas actionné, ou l'accélérateur (16) est actionné dans un mode de fonctionnement autre que le mode normal,
l'unité de réglage de limite est configurée pour régler le mode de fonctionnement sur le mode limite lorsque l'unité de détermination d'état non assis détermine que la durée d'état non assis est inférieure ou égale au temps de détermination d'état non assis, et
l'unité de réglage d'interruption est configurée pour régler le mode de fonctionnement sur le mode d'interruption lorsque l'unité de détermination d'état non assis détermine que la durée d'état non assis est supérieure au temps de détermination d'état non assis,
le dispositif de commande (31) inclut une unité de continuité de déplacement qui est configurée pour continuer un déplacement dans le mode normal si l'état non assis est détecté pendant que l'accélérateur (16) est actionné dans le mode normal.

2. Véhicule industriel (10) selon la revendication 1, dans lequel le dispositif de commande (31) est configuré pour régler, dans le cas où le mode de fonctionnement est réglé sur le mode limite, le mode de fonctionnement sur le mode normal lorsque l'état de conducteur détecté par l'unité de détection de conducteur (36) devient l'état assis.

3. Véhicule industriel (10) selon la revendication 1 ou 2, comprenant en outre :
une unité d'instruction de direction (17) qui donne des instructions relatives à une direction de déplacement du véhicule industriel (10) conformément à une direction en fonctionnement ; et
une unité de détection de direction (35) qui détecte la direction en fonctionnement,
dans lequel le dispositif de commande (31) est configuré pour régler, lorsque le mode de fonctionnement est réglé sur le mode d'interruption, le mode de fonctionnement sur le mode normal lorsque l'état de conducteur est l'état assis et l'unité de détection de direction (35) détecte un changement de direction en fonctionnement.

4. Véhicule industriel (10) selon l'une quelconque des revendications 1 à 3, dans lequel le dispositif de commande (31) inclut :
une unité de détermination d'état d'arrêt configurée pour déterminer si oui ou non le véhicule industriel (10) est dans un état d'arrêt ; et
une unité d'interruption forcée configurée pour régler le mode de fonctionnement sur le mode d'interruption lorsque l'état non assis est détecté pendant que le véhicule industriel (10) est dans un état d'arrêt.

5. Procédé de commande d'un véhicule industriel (10), le véhicule industriel (10) incluant un moteur (51), une roue motrice (12, 13), un mécanisme de transmission de force motrice (60) configuré pour transmettre une force motrice du moteur (51) à la roue motrice (12, 13), un siège conducteur (15) sur lequel un conducteur est assis, et un accélérateur (16) qui donne l'instruction d'une accélération par la force motrice en réponse à un actionnement par le conducteur, le procédé comprenant :
détecter un état de conducteur parmi des états de conducteur incluant un état non assis, dans lequel le conducteur est non assis sur le siège conducteur (15), et un état assis, dans lequel le conducteur est assis sur le siège conducteur (15) ; et
régler un mode de fonctionnement parmi des modes de fonctionnement sur la base de l'état de conducteur détecté, dans lequel
les modes de fonctionnement incluent un mode normal, un mode limite qui limite la force motrice, et un mode d'interruption qui interrompt une transmission de la force motrice à la roue motrice (12, 13) par le mécanisme de transmission de force motrice (60), et
le réglage du mode de fonctionnement inclut :
déterminer, lorsque l'état de conducteur est l'état non assis, si oui ou non une durée d'état non assis, pendant laquelle l'état non assis continue, est inférieure ou égale à un temps de détermination d'état non assis spécifié ;
dans une condition où l'accélérateur (16) n'est pas actionné, ou l'accélérateur (16) est actionné dans un mode de fonctionnement autre que le mode normal,
régler le mode de fonctionnement sur le mode limite lorsque la durée d'état non assis est déterminée comme étant inférieure ou égale au temps de détermination d'état non assis, et
régler le mode de fonctionnement sur le mode d'interruption lorsque la durée d'état non assis est déterminée comme étant supérieure au temps de détermination d'état non assis ; et
continuer un déplacement dans le mode normal si l'état non assis est détecté pendant que l'accélérateur (16) est actionné dans le mode normal.
